# EUROPÄISCHE PATENTSCHRIFT

(11) **EP 1 924 946 B1**
(45) Veröffentlichungstag und Bekanntmachung des Hinweises auf die Patenterteilung: **15.12.2010**
(21) Anmeldenummer: 06791768.2
(22) Anmeldetag: 31.08.2006
(51) Int. Cl.: G06K 7/00, H04B 1/38

(54) **SMART CARD CONNECTOR MIT SCHIRMEINRICHTUNG FÜR KARTEN MIT GERINGEM PITCH**
SMART CARD CONNECTOR WITH SHIELDING DEVICE FOR CARDS WITH A SMALL PITCH
CONNECTEUR DE CARTE INTELLIGENTE COMPORTANT UN DISPOSITIF DE PROTECTION CONÇU POUR DES CARTES A FAIBLE ESPACEMENT

(30) Priorität: 31.08.2005 DE 102005041316; 31.08.2006 DE 102006040826
(43) Veröffentlichungstag der Anmeldung: 28.05.2008
(73) Patentinhaber: Amphenol-Tuchel Electronics GmbH, 74080 Heilbronn (DE)
(72) Erfinder: SCHNELL, Thomas, 74078 Heilbronn (DE)
(74) Vertreter: Wagner, Karl H.
(86) Internationale Anmeldenummer: PCT/EP2006/008530
(87) Internationale Veröffentlichungsnummer: WO 2007/025758

(56) Entgegenhaltungen:
- WO-A-2004/036483
- WO-A-2005/093636
- US-A- 5 933 328

## Beschreibung

Die Erfindung bezieht sich allgemein auf einen Smart Card Connector und zwar insbesondere auf einen Smart Card Connector für zwei Smartkarten bzw. Chipkarten. Insbesondere bezieht sich die Erfindung auf einen Smart Card Connector für eine (verhältnismäßig große) SIM-Karte (erste Karte) sowie eine (verhältnismäßig kleine) Micro-SD-Karte oder eine Trans Flash-Karte (zweite Karte).

In der deutschen Patentanmeldung Nr. 10 2004 015 279.9 eingereicht am 29. März 2004 ist bereits ein Smart Card Connector (auch Chipkartenleser genannt) insbesondere mit.Schirmeinrichtung beschrieben, wobei eine Abschirmung für den Smart Card Connector insgesamt sowie auch eine Abschirmung der beiden Karten gegeneinander erreicht wird.

Die vorliegende Erfindung hat sich insbesondere die Aufgabe gestellt einen Smart Card Connector, insbesondere auch einen Smart Card Connector der in der oben genannten deutschen Patentanmeldung beschriebenen Art derart auszubilden, dass bei außerordentlich engen Abständen der Kontaktflächen der Kartenkontakte auf einer Karte, insbesondere einer Micro SD-Karte oder einer Trans Flash-Karte eine sichere Kontaktierung der entsprechenden Kontaktelemente im Smart Card Connector erreicht wird. Beispielsweise die Micro SD-Karte oder auch die Trans Flash-Karte besitzt einen sehr engen Kontakt- bzw. Kontaktflächenabstand oder Pitch-Abstand der beispielsweise in der Größenordnung von nur noch 1,1 mm liegen kann. Somit liegen die, die Kartenkontakte bildenden Kontaktflächen, räumlich sehr eng zusammen.

Aus der US 5 933 328 A ist ein Smart Card Connector für zwei Smart Karten bekannt, und zwar mit einem Kontaktträger, in dem ein erster Satz von Kontaktelementen und ein zweiter Satz von Kontaktelementen angeordnet ist. Ein Deckel, der zur Aufnahme der Smart Karten dient, ist schwenkbar am Kontaktträgergehäuse angebracht.

Die vorliegende Erfindung sieht einen Smart Card Connector für zwei Start Karten gemäß Anspruch 1 vor. Bevorzugte Ausgestaltungen der Erfindung ergeben sich aus den Unteransprüchen.

Erfindungsgemäß ist vorgesehen, dass für die Karten, insbesondere die im Smart Card Connector oben angeordnete zweite Karte, nämlich die Micrö SD-oder Trans Flash-Karte eine exakte kantenführung sowie Kartenpositionierung vorgesehen wird, um so einen Kurzschluss der die Kartenkontakte bildenden Kontaktflächen zu vermeiden.

Erfindungsgemäß wird die Karte insbesondere in horizontaler Richtung, d.h. in Kartensteckrichtung exakt geführt und exakt positioniert. Diese exakte Führung in Einsteckrichtung und die präzise Positionierung der Karte mit ihren Kontaktflächen gegenüber den entsprechenden Kontaktelementen im Kontaktträger wird insbesondere durch sogenannte Ableitfedern vorgesehen, die sich unabhängig von der Kartentoleranz immer an die Seitenwände bzw. Seitenkanten der Karte anlegen.

Erfindungsgemäß wird der um die Kontaktflächen liegende Kartenkörper zur Aktivierung der Ableitfedern verwendet. Da dieser mit einem Abstand von 0,5 mm zu den Kontaktflächen ebenfalls stark eingeschränkt wurde, ist auch hier eine exakte Kartenführung notwendig. Diese soll verhindern, dass die Karte von den Ableitfedern herunterrutscht oder die Ableitfedern die Kontaktflächen kurzschließen.

Die erfindungsgemäß vorgesehen Kartenführungs- und Positionierungsmittel des Smart Card Connectors sind insbesondere an einem Deckel zur Aufnahme der Micro SD- oder Trans Fiash-Karte ausgebildet. Erfindungsgemäß wird die Karte beim Steckvorgang seitlich in Richtung gebracht und gehalten. Ein Herunterrutschen der Karte von den Ableitfedern, wenn sich die Karte durch einen unsachgemäßen Einlegevorgang im Kartenschacht dreht, wird verhindert. Ferner wird insbesondere ein Kurzschluss zwischen den Ableitfedern und den Kontaktflächen der Karte durch seitliche Führungselemente vermieden.

Erfindungsgemäß vorgespannte Ableitfedern garantieren die Funktion auch bei unterschiedlich breiten Karten (Kartentoleranz).

Der erfindungsgemäße Smart Card Connector für zwei Smart Karten, das heißt eine erste (untere) Karte, insbesondere eine SIM-Karte und eine zweite (obere) Karte, insbesondere eine Micro SD- bzw. Trans Flash-Karte weist vorzugsweise einen einzigen Kontaktträger auf, der eine Oberseite und eine Unterseite definiert. In dem Kontaktträger ist ein erster Satz von Kontaktelementen für die Kontaktierung der Kontaktflächen der ersten Karte angeordnet, und ferner ist ein zweiter Satz von Kontaktelementen für die Kontaktierung der Kontaktflächen einer zweiten Karte im Kontaktträger angeordnet. Die Kontaktenden der Kontaktelemente der ersten und zweiten Sätze besitzen jeweils Anschlussenden und Kontaktenden bzw. Kontaktstellen. Die Anschlussenden der Kontaktelemente der beiden Kontaktsätze befinden sich vorzugsweise in einer Ebene an der Unterseite des Kontaktträgers. Die Kontaktenden der Kontaktelemente befinden sich an der Oberseite des Kontaktträgers. Die Kontaktenden der Kontaktelemente der ersten und zweiten Sätze liegen auf unterschiedlichen Ebenen.

Ferner ist am Kontaktträger ein die Oberseite des Kontaktträgers überspannendes Schirmblech angebracht und bildet mit dem Kontaktträger einen Aufnahmeschacht für die erste (untere) Karte vorzugsweise eine SIM-Karte. Ein vorzugsweise am Schirmblech angebrachter Metalldeckel bildet einen zweiten Aufnahmebereich oder Kartenschacht für die zweite Karte. Vorzugsweise ist der Metalldeckel schwenkbar am Schirmblech gelagert.

Insbesondere der zur Aufnahme der zweiten (oberen) Karte vorgesehene Metalldeckel ist erfindungsgemäß derart ausgebildet, dass die zweite Karte, beispielsweise eine Micro SD- oder Trans Flash-Karte seitlich präzise geführt ist und exakt positioniert wird.

Bevorzugte Ausgestaltungen der Erfindung ergeben sich aus den Ansprüchen. Ein Ausführungsbeispiel eines Smart Card Connectors mit einer Schirmeinrichtung für eine erste Karte (insbesondere eine SIM-Karte) und eine zweite Karte (insbesondere eine Micro SD- bzw. Trans Flash-Karte) sei unter Bezugnahme auf die Zeichnung beschrieben. In der Zeichnung zeigt:
FIG 1.: Eine perspektivische Draufsicht auf einen erfindungsgemäßen einen Deckel aufweisenden Smart Card Connector, wobei der Deckel in seiner Öffnungsstellung dargestellt ist und weder die erste noch die zweite Karte gezeigt sind;
FIG 2.: eine perspektivische Draufsicht auf den Smart Card Connector gemäß FIG 1. und zwar in seiner Schließstellung, wobei die zweite (obere) Karte, das heißt eine Micro SD-Karte dargestellt ist, die allerdings nicht in den Deckel eingesetzt ist (in der Praxis wird die zweite Karte in der Öffnungsstellung des Deckels in diesen eingesetzt);
FIG. 3: eine Draufsicht, ähnlich der in FIG. 2, wobei hier die zweite Karte sich in ihrer vollständig eingesetzten Stellung bzw. Lesestellung befindet, während die erste Karte, die vorzugsweise eine SIM-Karte ist, nicht dargestellt ist;
FIG. 4: eine Teilansicht der FIG. 1;
FIG. 5: eine perspektivische Draufsicht auf die Unterseite des Deckels; und
FIG. 6: eine perspektivische Draufsicht auf den einen Teil des Smart Card Connectors gemäß FIG. 1 bildenden Kontaktträgers; und
Fig. 7: eine perspektivische Teildraufsicht ähnlich Fig. 2.

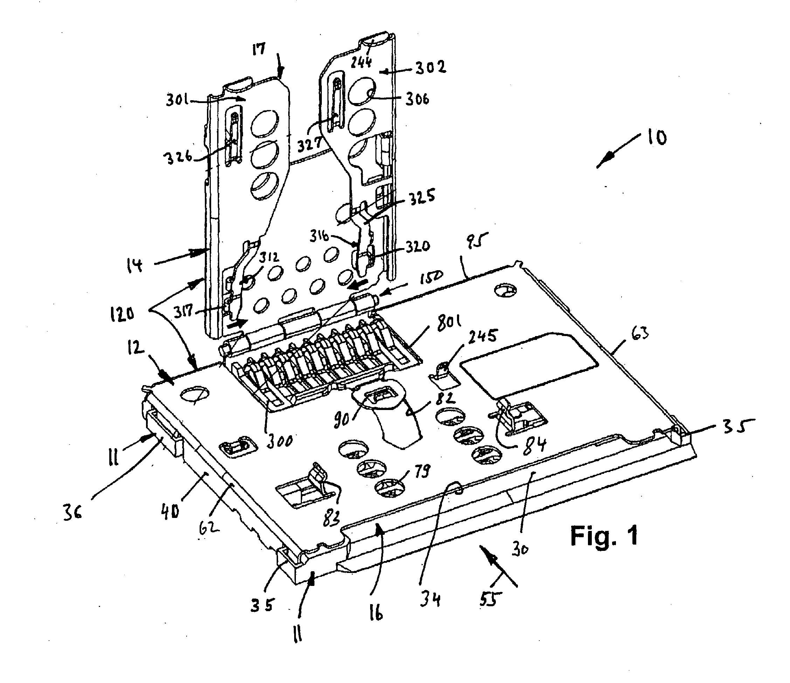

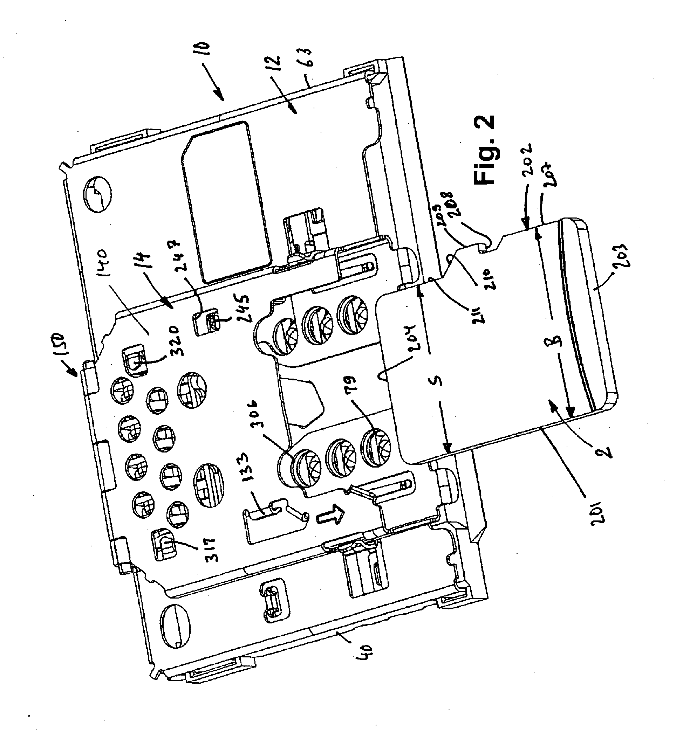

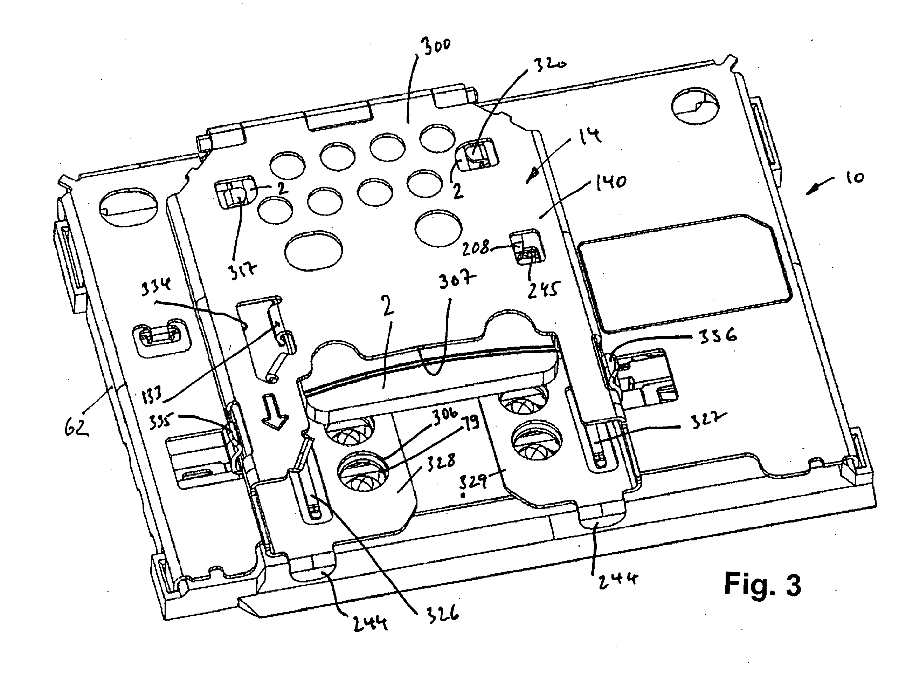

In den FIG. 1 bis 7 ist ein Ausführungsbeispiel eines Smart Card Connectors 10 für zwei Smart Karten, und zwar beispielsweise für eine SIM-Karte, im Folgenden erste Karte, und eine Micro SD- oder Trans Flash-Karte 2, im Folgenden zweite Karte 2, gezeigt. Die zweite Karte 2 ist in den FIG. 2 und 3, aber nicht in den anderen Figuren, dargestellt. Die erste, z.B. die erste Karte, ist überhaupt nicht dargestellt. Dem Fachmann ist klar, dass die SIM-Karte, beispielsweise gemäß FIG. 1, in einen Kartenaufnahmeschacht 16 einsetzbar ist, der zwischen einer Oberseite 30 eines Kontaktträgers 11 und der Unterseite eines noch näher zu beschreibenden Abschirmelements 12, vorzugsweise einem Schirmblech 12 einer Schirmeinrichtung 120 gebildet ist.

Im Folgenden wird einfach das Wort Karte für die beiden genannten Karten verwendet, d.h. die SIM-Karte wird allgemein als erste Karte und die Micro SD- oder Trans Flash-Karte 2 wird allgemein als eine zweite Karte 2 bezeichnet.

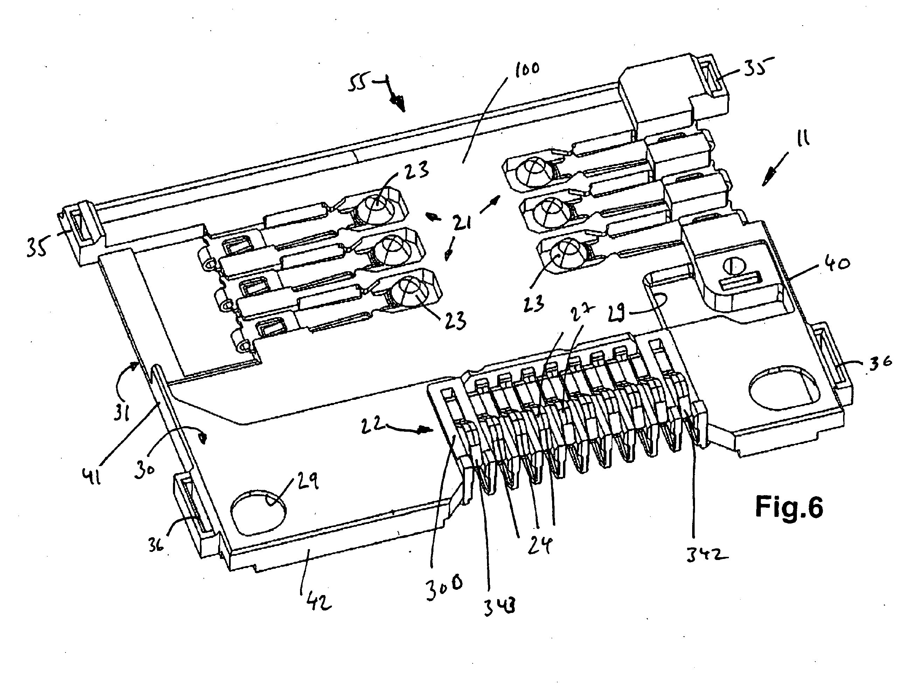

Der Smart Card Connector 10 - vergleiche Fig. 1 und 6 - weist den Kontaktträger 11 sowie die Schirmeinrichtung 120 auf, die eine Abschirmung insgesamt und auch für die beiden Karten 1, 2 untereinander bzw. gegeneinander vorsieht. Die Schirmeinrichtung 120 weist das bereits erwähnte, am Kontaktträger 11 angebrachte Abschirmelement 12 und einen vorzugsweise am Abschirmelement 12 schwenkbar gelagerten Deckel 14 auf, der vorzugsweise als Metalldeckel 14 ausgebildet ist. Im Folgenden wird auf den abschirmenden Metalldeckel 14 kurz als Deckel 14 Bezug genommen.

Obwohl das Abschirmelement 12 vorzugsweise aus Metallblech besteht, könnten sowohl das Abschirmelement 12 wie auch der Deckel 14 beispielsweise aus metallisiertem Kunststoff bestehen.

### Der Kontaktträger 11

Der insbesondere in FIG. 6 dargestellte Kontaktträger 11 bildet entgegengesetzt zu seiner Oberseite 30 eine Unterseite 31. Die Ansicht gemäß FIG. 6 zeigt, dass die Oberseite 30 ebene Flächen bildet, welche auf unterschiedlichen Niveaus oder Höhen liegen.

Ein erster Satz 21 von Kontaktelementen oder kurz von Kontakten 23 ist im Kontaktträger 11 befestigt, vorzugsweise verrastet, und zwar ist der erste Satz 21 in vom Kontaktträger 11 gebildeten Hohlräumen eingesetzt. Jedes Kontaktelement 23 ist im Ganzen U-förmig gebogen, wobei am Ende des längeren Schenkels des U ein Kontaktende gebildet wird. Der erste Satz 21 dient zur Kontaktierung der Kartenkontakte der ersten Karte.

Ein zweiter Satz 22 von Kontaktelementen 24 ist im Kontaktträger 11 ebenfalls vorzugsweise durch Verrasten und zwar quer zum Verlauf der Kontaktelemente 23 des ersten Satzes 21 angebracht. Der zweite Satz 22 von Kontaktelementen 24 erstreckt sich entlang der einen Längsseitenfläche 42 des im Ganzen rechteckigen Kontaktträgers 11. Jedes der Kontaktelemente 24 besitzt eine Kontaktkuppe 27 und ein nicht gezeigtes Anschlussende. Sowohl die ersten Kontaktelemente 23 als auch die zweiten Kontaktelemente 24 sind in die in FIG. 6 gezeigten Positionen vorzugsweise vorgespannt. Die Kontaktelemente 23 verlaufen also quer zum Verlauf der Kontaktelemente 24. An beiden Seiten des zweiten Satzes 22 ist jeweils ein Erd- bzw. Ableitungskontakt 342 bzw. 343 vorgesehen.

Der Kontaktträger 11 bildet mehrere Durchtrittsöffnungen 29, durch die Bauelemente ragen können, die auf einer (nicht gezeigten) Schaltungsplatte vorgesehen sind, auf der der Kontaktträger 11 beispielsweise angeordnet ist.

Für die Anbringung des Abschirmelements 12 an und über der Oberseite 30 des Kontaktträgers 11 sind am Kontaktträger 11 beidseitig - vgl. FIG. 1 - benachbart zu einem Einführschlitz 34 in den Kartenschacht 16 für die erste Karte jeweils eine Abschirmelementaufnahme 35 vorgesehen. In Einschubrichtung 55 der ersten Karte nach hinten versetzt, bildet der vorzugsweise aus Kunststoff gespritzte Kontaktträger 11 zwei weitere Abschirmelementaufnahmen 36 an entgegengesetzten Seitenwänden 40, 41 des Kontaktträgers 11. An den vier Ecken des Abschirmelements 35 gebildete Haltelappen - vergleiche Fig. 1 und 3 - sind in die Abschirmelementaufnahmen 35, 36 eingesetzt.

Im nicht-kontaktierten Zustand liegen die Kontaktkuppen der ersten Kontaktelemente 23 etwas oberhalb einer durch die Oberseite 30 des Kontaktträgers 11 gebildeten Auflagefläche 100 für die erste Karte und werden beim Einführen der ersten Karte nach unten gedrückt. Ähnlich liegen die Kontaktkuppen 27 der zweiten Kontaktelemente 24 etwas oberhalb einer für die zweite Karte gebildeten Auflagefläche 300. Die Kontaktelemente 24 sind in diese vorstehende Position vorgespannt, um dann beim Erreichen der Schließstellung des Deckels 14, in dem sich die zweite Karte 2 befindet, durch die zweite Karte 2 niedergedrückt zu werden, um eine gute Kontaktierung mit den Kontaktflächen der zweiten Karte 2 vorzusehen. Die Auflagefläche 300 für die zweite Karte 2 liegt vorzugsweise höher als die Auflagefläche 100 für die erste Karte.

Wie in den FIGS. 1 bis 3 gezeigt, ist auf dem Kontaktträger 11 das vorzugsweise als Schirmblech 12 ausgebildete Abschirmelement 12 befestigt und bildet dadurch den Kartenaufnahmeschacht 16.

Die Schirmeinrichtung 120 weist, wie erwähnt, das Abschirmelement 12 und einen Deckel 14 auf.

### Das Abschirmelement 12

Wie beispielsweise in FIG. 1 gezeigt, besitzt das im gezeigten Ausführungsbeispiel als Schirmblech 12 ausgebildete Abschirmelement 12 zwei diametral angeordnete Seitenwände 62, 63 und eine quer dazu verlaufende (FIG. 1) Seitenwand 95. Das Schirmblech 12 bildet entgegengesetzt zur Seitenwand 95 keine Längsseitenwand, um so den Einführschlitz 34 zum Aufnahmeschacht 16 für die erste Karte vorzusehen.

Ferner sind in dem Schirmblech 12 vorzugsweise (wenn auf dem Kontaktträger 1 angeordnet) im Bereich der Kontaktelemente 23 mehrere Prüflöcher 79 vorgesehen, um die Kontaktelemente 23 prüfen zu können. Benachbart zur in FIG. 1 hinteren Seitenwand 95 des Schirmblechs 12 ist im Schirmblech 12 ein vorzugsweise rechteckiger Ausschnitt 801 vorgesehen. Der Ausschnitt 801 gestattet es, dass sich im zusammengebauten Zustand des Smart Card Readers 10 - vgl. FIG. 1 - die Auflagefläche 300 sich auf ein höheres Niveau erstrecken kann.

Von dem Ausschnitt 801 aus verläuft - vgl. dazu wieder FIG. 1 - ein bogenförmiger Führungsschlitz 82, in dem eine Kartenauswerfanordnung 90 geführt ist. Die Kartenauswerfanordnung 90 dient zum Herausschieben der ersten Karte aus der Lesestellung, die bei vollständig in den Kartenschacht 16 eingesetzter erster Karte gegeben ist.

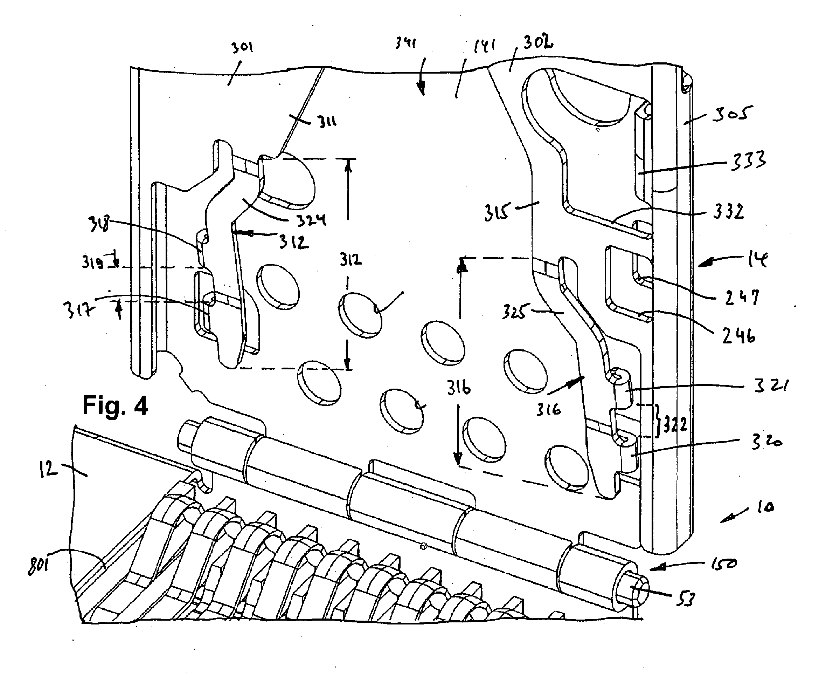

Am Schirmblech 12 ist - vgl. FIG. 4 - der Deckel 14 vorzugsweise mittels eines Scharniers 150 schwenkbar gelagert. Das Scharnier 150 weist einen Stab 53 auf, um den vom Schirmblech 12 sowie vom Deckel 10 gebildete Vorsprünge herumgreifen.

Das Schirmblech 12 ist vorzugsweise derart ausgebildet, dass sich mindestens ein Halteelement 245 (vgl. Fig. 1) aus der Ebene des Abschirmelements 12 nach oben erstreckt, derart, dass bei geschlossenem Deckel 14 das Halteelement 245 durch eine Öffnung 246 in mindestens einem Flügel 302 der noch zu beschreibenden Flügel 301, 302 des Deckels 14 hindurchragt und mit seinem oberen Ende in den Kartenaufnahmeschacht 17 der zweiten Karte 2 hineinragt. Vorzugsweise kann das Halteelement 245 auch noch durch bzw. in eine Öffnung 247 in einer noch zu beschreibenden Anlenkplatte 341 des Deckels 14 ragen (vgl. Fig. 4).

Das Halteelement 245 kann vorzugsweise wie in Fig. 3 gezeigt mit einer noch zu beschreibenden Ausnehmung 208 der Karte 2 verrasten und diese in deren Leseposition halten.

Ferner sind an der Oberseite des Schirmblechs 12 gefederte Deckelrastverriegelungen bzw. Klemmfinger 83 und 84 vorgesehen, die durch aus dem Schirmblech 12 herausgestanzte, nach oben gebogene Lappen gebildet werden.

### Der Deckel 14

Insbesondere in den Figuren 1 bis 5 und 6 erkennt man, dass der Deckel 14 die bereits erwähnte Anlenkplatte 341 aufweist, die eine obere bzw. Außenseite 140 und eine untere bzw. Innenseite 141 besitzt. An der Anlenkplatte sind zwei Flügel 301, 302 bzw. Umlegeteile vorgesehen.

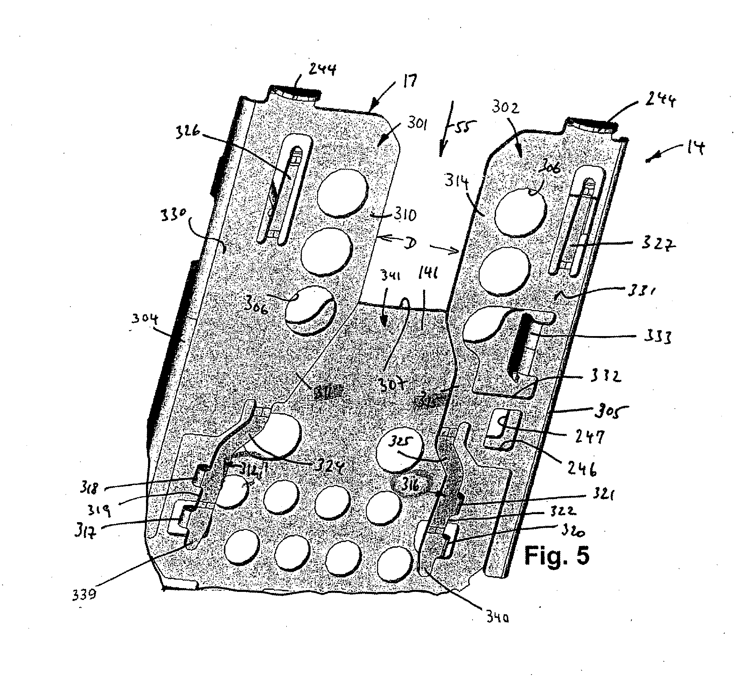

Die Anlenkplatte 341 ist (mit ihrem in FIG: 3 gezeigten hinteren bzw. in FIG. 4 gezeigten unteren Ende) an der Stange 53 angelenkt. Die Anlenkplatte 341 ist vorzugsweise einstückig mit den zwei bezüglich einander beabstandeten Flügeln 301 und 302 ausgebildet. Dieser Abstand D (Fig. 5) ist in Steckrichtung der Karte 2 unterschiedlich. Die Flügel 301 und 302 sind vorzugsweise aus dem gleichen Stück Blech (bzw. metallisiertem Kunststoff) geformt wie die Anlenkplatte 341 selbst und durch Umbiegeteile bzw. Seitenwände 304 und 305 mit der eigentlichen Anlenkplatte 341 verbunden. Auf diese Weise ist die Anlenkplatte 341 von den Flügelteilen 301, 302 beabstandet, so dass der bereits erwähnte Kartenschacht 17 zum Einsetzen der zweiten Karte 2 entsteht.

Die Anlenkplatte 341 des Deckels 14 bildet einen Ausschnitt 307 (Fig. 3). Die Flügel 301, 302 haben jeweils breitere Flügelteilen 310 bzw. 314 die in etwa im Bereich der Längserstreckung der Ausnehmung 307 (in Kartensteckrichtung 55) verlaufen. Die breiteren Flügelteile 310, 314 besitzen anschließend daran jeweils einen verjüngten Flügelteil 311 bzw. 315. Vom verjüngten Flügelteil 311 ragen - vorzugsweise im Wesentlichen in Steckrichtung 55 - Kartenführungs- und Ableit- bzw. Erdmittel 312, vorzugsweise in der Form eines Führungsarms 312 weg. Ebenso ragen vom verjüngten Flügelteil 315 Kartenführungs- bzw. Ableit- bzw. Erdmittel 316 vorzugsweise in der Form eines Führungsarms 316 weg, und zwar vorzugsweise ebenfalls im Wesentlichen in Kartensteckrichtung 55.

Der Führungsarm 312 bildet vorzugsweise zwei mit einem Abstand 319 angeordnete Führungsteile bzw. Führungen 317, 318 die vorzugsweise durch Umlegen von am Führungsarm 312 ausgebildeten Lappen gebildet werden. In gleicher Weise bildet der Führungsarm 316 Führungsteile bzw. Führungen 320 und 321 die in Karteneinschubrichtung 55 mit dem Abstand 322 beabstandet sind.

Die beiden Führungsarme 312, 316 sind an ihren freien Enden vorzugsweise abgerundet und bilden Kontaktflächen 339, 340 zur Kontaktierung der Erd- und Ableitungskontakte 342, 343. Ferner bildet sowohl der Führungsarm 312 einen Abwinkelteil 324 im Übergang zu dem verjüngten Flügelteil 311. Zum anderen bildet der Führungsarm 316 im Übergang zum verjüngten Führungsteil 315 einen Abwinkelteil 325. Die zwei Flügel 301 und 302 besitzen - vgl. FIG. 3 - eine gemeinsame Ebene aufspannende Oberflächen 328 und 329. Auch die Unterseiten 330 bzw. 331 der Flügel 301 bzw. 302 bilden ebene Flächen, die eine gemeinsame Ebene aufspannen.

Zwei in Querrichtung des Deckels 14 beabstandete Verschlussvorsprünge 244 für den Kartenschacht 16 sind an den beiden Flügeln 301, 302 ausgebildet. In Karteneinschubrichtung versetzt dazu ist in den beiden Flügelteilen 310, 311 vorzugsweise jeweils eine Ableitfeder 326 und 327 ausgestanzt und über die Oberflächen 330, 331 vorgebogen, so dass bei geschlossenem Deckel 14 guter elektrischer Kontakt mit dem Schirmblech 12 entsteht. Insbesondere ist mindestens eine Ableitfeder 326, 327 an mindestens einem der Flügel 301, 302 so befestigt, dass diese aus der durch die beiden Flügel 301, 302 aufgespannten Ebene herausragt, so dass im geschlossenen Zustand des Deckels 14 die Ableitfeder/n 326, 327 mit dem Abschirmblech 12 in Kontakt kommen.

Wie in FIG. 5 gezeigt, ist in dem verjüngten Flügelteil 315 ein Loch 332 ausgestanzt, wobei ein vorzugsweise von einem Umbiegeteil 305 des Deckels 14 wegstehender Lappen verblieb, der umgebogen ist, und so einen Anschlag bzw. eine Führung 333 für die zweite Karte 2 bildet. Der Anschlag 333 bildet vorzugsweise eine Anschlagfläche für eine Längs- bzw. Seitenkante 202 der Karte 2 (vgl. FIG. 2).

Etwa auf der, in Einsteckrichtung 55, gleichen Höhe wie der Anschlag 333 bildet die Anlenkplatte 341 einen weiteren Anschlag bzw. eine Führung 133 (wie in FIG. 3 zu sehen ist) und zwar dadurch, dass ein Loch 334 in der Anlenkplatte 341 herausgestanzt wird, wobei ein Lappen verbleibt, der umgebogen wird, um so den Anschlag 133 zu bilden. Der Anschlag 133 bildet vorzugsweise eine Rille zur Aufnahme und Führung der Seitenkante 201 der Karte 2.

Der Deckel 14 schließlich wird in seiner in FIG. 3 gezeigten Schließstellung auch durch die aus der Abschirmplatte 12 herausgestanzte und umgebogene Klemmfinger 83, 84 gehalten.

### Die zweite Karte 2

Die in FIG. 2 gezeigte vorzugsweise verwendete zweite Karte 2 bildet die erwähnten Längskanten 201, 202 sowie Querkanten 203, 204. Im Gegensatz zur Längskante 201 verläuft die Längskante 202 nicht geradlinig, sondern bildet in einem breiten Bereich B der Karte 2 einen in Steckrichtung verlaufenden Kantenteil 207, daran anschließend eine Ausnehmung 208, nach der sich die Längskante 202 in einem schmäleren Längskantenteil 209 fortsetzt. Anschließend an den Längskantenteil 209 bildet die Karte einen nach innen weisenden Abschrägteil 210, von dem aus sich dann ein den schmalen Teil S der Karte begrenzender Längskantenteil 211 erstreckt.

Die Längskante 201 der Karte 2 ist insbesondere durch den Anschlag 133 geführt; sie ist ferner auch mit großer Präzision durch den Führungsarm 312 bzw. dessen Führungsteile 317, 318 geführt und positioniert. Die andere Längskante 202 der Karte 2 ist einmal durch die Führung 333 geführt. Zum anderen ist der Längskantenteil 211 der Karte 2 mit großer Präzision durch den Führungsarm 316 bzw. dessen Führungsteile 320 und 321 geführt und positioniert.

Die Führungsarme 312, 316 sind wie in FIG. 1 durch die dicken Pfeile angedeutet nach innen oder aufeinander zu vorgespannt, um eine präzise Führung für die eingesetzte Karte 2 vorzusehen. Diese Vorspannung kann auch so erzeugt werden, dass die leicht abgewinkelten Führungsarme 312, 316 beim Einführen der Karte 2 etwas seitlich elastisch gebogen werden und so die Karte 2 präzise führen und halten.

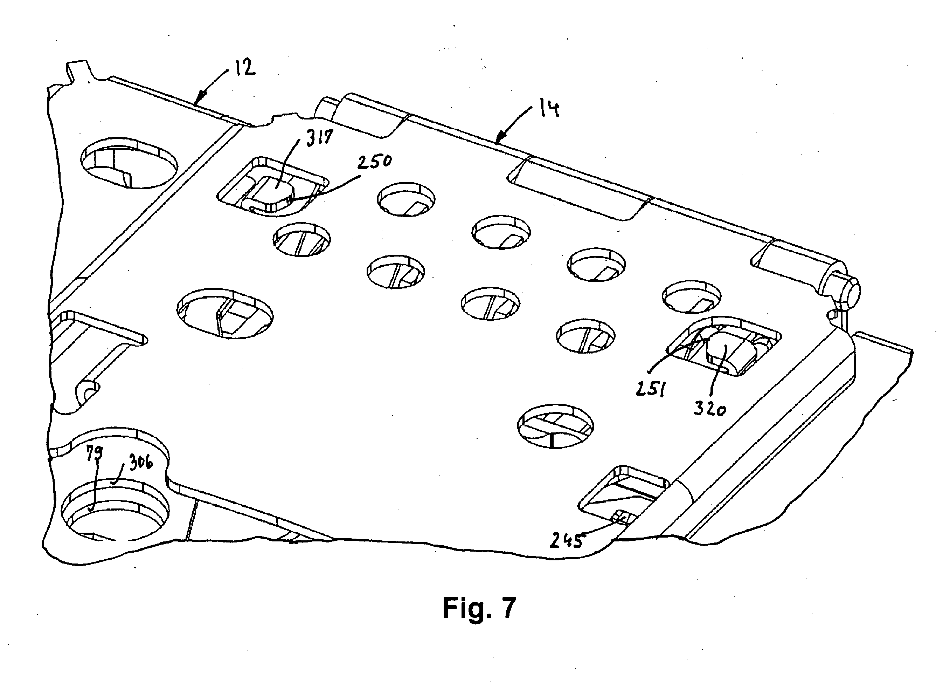

Die beiden Führungsarme 312, 316 sind, wie gesagt, zu ihrem freien Ende hin mit vorzugsweise jeweils zwei Führungsteilen 317, 318 bzw. 320, 321 ausgestattet. Wie man in Fig. 3 und deutlicher in Fig. 7 erkennt, besitzen zumindest die beiden vordersten Führungsteile 317 bzw. 320 jeweils nach innen weisende Führungskanten 250 bzw. 251, die, wie in Fig. 3 gezeigt, eine präzise Führung und Halterung der Karte 2 vorsehen, und zwar insbesondere dadurch, dass die Führungskanten 250, 251 seitlich an den Längskanten bzw. dem Längskantenteil 202 bzw. dem Längskantenteil 211 der Karte 2 federnd anliegen.

Die Kartenführungsmittel 312, 316 verfügen also über jeweils mindestens einen Führungsteil 317, 318 bzw. 320, 321, die mit den Kanten der zweiten Karte 2 zusammenwirken und diese präzise positionieren. Wie bereits erwähnt, können sich die Führungsarme 312, 316 bei nicht eingesetzter zweiter Karte 2 in den Kartenaufnahmeschacht 17 der zweiten Karte 2 erstrecken.

Ferner ist, wie bereits erwähnt, mindestens eine Ableitfeder 326, 327 an mindestens einem der Flügel 301, 302 derart befestigt bzw. ausgebildet, dass diese aus der durch die beiden Flügel 301, 302 aufgespannten Ebene herausragt, so dass im geschlossenen Zustand des Deckels 14 die Ableitfedern 326, 327 mit dem Abschirmblech 12 in Kontakt kommen.

Vorzugsweise sind zur Kartenführung und -halterung ferner die bereits erwähnten Anschläge bzw. Führungen 133 und 333 vorgesehen. Der Anschlag 133 erstreckt sich - vergleiche Fig. 3 - von der Anlenkplatte 341 "nach unten" in den Kartenaufnahmeschacht 17. Der andere Anschlagteil 333 erstreckt sich, wie zum Beispiel in den Fig. 4 und 5 gezeigt, vom Flügel 302 nach oben in den Kartenschacht 17.

Zusammenfassend kann man sagen, dass die erfindungsgemäß vorgesehene Schirmeinrichtung 120 eine exakte Führung der Karte 2 in horizontaler Richtung vorsieht, wobei sich die Ableitfedern unabhängig von der Kartentoleranz immer an die Seitenwände der Karte 2 anlegen. Dabei wird die Karte 2 beim Steckvorgang seitlich in Richtung gebracht und gehalten. Die Karte 2 kann dabei nicht von den Ableitfedern herunter rutschen, sollte sich die Karte durch einen unsachgemäßen Einlegevorgang im Kartenschacht 17 drehen. Die vorgespannten Ableitfedern garantieren die Funktion auch bei unterschiedlich breiten Karten. Ferner wird durch die seitlichen Führungselemente ein Kurzschluss zwischen den Ableitfedern und den Kontaktflächen der Karte vermieden.

Zur Überprüfung der Funktionsfähigkeit des Smart Card Connectors 10 sind, wie bereits erläutert, sowohl im Abschirmelement 12 als auch im Deckel 14 sogenannte Prüflöcher vorgesehen. Im Einzelnen sei dazu nochmals darauf hingewiesen, dass die sich in den Flügeln 301, 302 befindlichen Prüflöcher 306 bei geschlossenem Deckel 14 jeweils mit Prüflöchern 79 des Abschirmelements 12 in Deckung kommen. Ferner ermöglicht die Aussparung 307 im Deckel, dass bei geschlossenem Zustand des Deckels 14 die Prüflöcher 306 bzw. 79 in den Flügeln 301, 302 bzw. im Schirmblech 12 zugänglich sind.

Das erwähnte Halteelement 245 erstreckt sich aus der Ebene des Abschirmelements 12 derart heraus, dass bei geschlossenem Deckel 14 das Halteelement 245 durch die Öffnung 246 in mindestens einem der Flügel 301, 302 hindurchragt und mit ihrem oberen Ende in den Kartenaufnahmeschacht 17 der zweiten Karte 2 hineinragt. Ferner ist mindestens eine Ableitfeder 326, 327 an mindestens einem der Flügel 301, 302 so befestigt, dass diese aus der durch die beiden Flügel 301, 302 aufgespannten Ebene herausragt, so dass im geschlossenen Zustand des Deckels 17 die Ableitfeder(n) 326, 327 mit dem Abschirmblech 12 in Kontakt kommen.

## Patentansprüche

1. Smart Card Connector (10) für zwei Smart-Karten (Chipkarten) mit einem Kontaktträger (11), in dem ein erster Satz (21) von Kontaktelementen und ein zweiter Satz (22) von Kontaktelementen angeordnet ist,
wobei ein Abschirmelement (12) auf dem Kontaktträger (11) zur Abschirmung des ersten Kontaktsatzes angebracht ist und mit der Oberseite (30)
des Kontaktträgers einen ersten Kartenaufnahmeschacht (16) für die erste Karte definiert,
wobei zur Abschirmung des zweiten Satzes (22) ein eine Abschirmung bewirkender Deckel (14) schwenkbar am Abschirmelement (12) angebracht ist und zur Aufnahme der einen Smart Card dient,
wobei der Deckel (14) eine Anlenkplatte (341) aufweist, die die Schwenkverbindung zum Abschirmelement (12) vorsieht, wobei der Deckel ferner, zur Bildung eines zweiten Kartenaufnahmeschachtes (17) für die zweite Karte (2), von der Anlenkplatte (341) beabstandete Flügel (301, 302) aufweist, die Kartenführungs- und Ableitmittel (312, 316) bilden, die zum einen mit Ableitungskontakten (342, 343) im Kontaktträger (11) in Kontakt kommen können, und die zum anderen Führungsteile (317, 318; 320, 321) bilden, welche die zweite Karte beim Einführen in den Kartenschacht (17) unabhängig von einer Kartentoleranz exakt führen und halten.

2. Smart Card Connector (10) für zwei Smart-Karten nach Anspruch 1, wobei die Führungsteile (317, 318) zu einander hin vorgespannt sind, und wobei die Kartenführungs- und -ableitmittel (312, 316) von jeweils breiteren Flügelteilen (310, 314) ausgehen.

3. Smart Card Connector (10) für zwei Smart Card Karten nach Anspruch 1, wobei die Erd-/Ableitmittel (312, 316) in der Form von Führungsarmen (312, 316) ausgebildet sind, die vorzugsweise in Kartensteckrichtung (55) verlaufen.

4. Smart Card Connector (10) für zwei Smart-Karten nach Anspruch 1 **dadurch gekennzeichnet, dass** die Kartenführungs-/Ableitmittel (312, 316) sowohl zur Führung der zweiten Karte (2) beim Einsetzen dienen sowie zur präzisen Positionierung der Karte (2) bezüglich der einen geringen Abstand aufweisenden Kontaktzonen der zweiten Karte (2), sowie der entsprechenden Abstände der Kontaktelemente (24) des zweiten Satzes (22), und wobei ferner die Kartenführungs-/Ableitmittel in der Form von zwei Armen, insbesondere vorgespannter Kontaktarme (336, 337), benachbart zur Eintrittsöffnung ausgebildet sind.

5. Smart Card Connector (10) für zwei Smart-Karten nach Anspruch 1, wobei die Kartenführungs-/Ableitmittel (312, 316) über jeweils mindestens ein Führungsmittel (317, 318, 320, 321) verfügen, die mit den Kartenkanten der zweiten Karte (2) zusammenwirken und diese präzise Positionieren, und wobei die Kartenführungs-/Ableitmittel vorzugsweise jeweils Führungsarme (312, 316) aufweisen.

6. Smart Card Connector (10) für zwei Smart-Karten nach Anspruch 5, wobei die Führungsarme (312, 316) sich bei nicht eingesetzter zweiter Karte (2) in den Kartenaufnahmeschacht (17) der zweiten Karte (2) erstrecken.

7. Smart Card Connector (10) für zwei Smart-Karten nach einem oder mehreren der vorhergehenden Ansprüche, insbesondere Anspruch 1, wobei sich in den Flügeln (301, 302) jeweils Prüflöcher (306) befinden, die bei geschlossenem Deckel (14) mit den Prüflöchern (79) des Abschirmelements (12) in Deckung kommen, und wobei der Deckel (14) im geschlossenen Zustand auf der Karteneinführseite im Bereich der darunter liegenden Prüflöcher (79) und im Bereich der Prüflöcher (306) eine Ausnehmung (307) besitzt, so dass die Prüflöcher (79, 306) von oben frei zugänglich sind.

8. Smart Card Connector (10) für zwei Smart-Karten nach einem oder mehreren der vorhergehenden Ansprüche, insbesondere Anspruch 1, wobei sich mindestens ein Halteelement (245) aus der Ebene des Abschirmelements (12) erstreckt, derart, dass bei geschlossenem Deckel (14) das Halteelement (245) durch eine Öffnung (246) in mindestens einem der Flügel (301, 302) hindurchragt und mit ihrem oberen Ende in den Kartenaufnahmeschacht (17) der zweiten Karte hineinragt.

9. Smart Card Connector (10) für zwei Smart-Karten nach einem oder mehreren der vorhergehenden Ansprüche, insbesondere Anspruch 1, wobei mindestens eine Ableitfeder (326, 327) an mindestens einem der Flügel (301, 302) so befestigt ist, dass diese aus der durch die beiden Flügel (301, 302) aufgespannten Ebene herausragt, so dass im geschlossenen Zustand des Deckels (14) die Ableitfeder bzw. die Ableitfedern (326, 327) mit dem Abschirmblech (12) in Kontakt kommen.

10. Smart Card Connector (10) für zwei Smart-Karten nach den Ansprüchen 8 oder 9, wobei das mindestens eine Halteelement (245) durch eine Öffnung (246) im Flügel (302) ragt, wobei die Öffnung (246) mit einer Öffnung (247) in der Anlenkplatte (341) ausgerichtet ist, und wobei das Halteelement (245) derart angeordnet ist, dass es in einer Ausnehmung (208) der zweiten Karte (2) einrasten kann.

11. Smart Card Connector (10) für zwei Smart-Karten nach einem der vorhergehenden Ansprüche, wobei die Führungsarme (312, 316) in Richtung aufeinander zu vorgespannt sind.

12. Smart Card Connector (10) für zwei Smart-Karten nach einem der vorhergehenden Ansprüche, wobei vier Kartenführungsteile (317, 318) am Deckel (14) vorgesehen sind.

13. Smart Card Connector (10) für zwei Smart-Karten nach einem der vorhergehenden Ansprüche, wobei ein Anschlag (133) für die seitliche Führung der zweiten Karte (2) von der Anlenkplatte (341) aus in den Kartenaufnahmeschacht (17) für die zweite Karte ragt, während ein weiterer Anschlag (333) zur seitlichen Führung der Karte (2) vom Flügel (302) in den Kartenschacht (17) für die zweite Karte (2) ragt.

## Claims

1. A smart card connector (10) for two smart cards (chip cards) said smart card connector comprising a contact support (11) within which a first set (21) of contact elements and a second set (22) of contact elements is arranged, wherein a shielding element (12) is provided on the contact support (11) for shielding the first contact set, the shielding element, defining together with the upper surface (30) of the contact support a first card receiving recess (16) for the first card,
wherein for shielding the second set (22) of contact elements a cover (14), providing a shielding effect, is pivotally mounted at the shielding element (12) and is adapted to receive one of the smart cards,
wherein the cover (14) comprises a coupling plate (341) which provides the pivotal connection to the shielding element (12) and wherein said cover further, for forming a second card receiving recess (17) for the second card (2), comprises wings (301,302) spaced from the coupling plate (341),
said wings forming card guiding and grounding means (312, 316) which can, first, come into contact with the conducting contacts (342, 343) in the contact support (11) and which, secondly, form guide members (317, 318,320, 321) which exactly guide the second during insertion into the card recess (17) independent of a card tolerances and which hold the card in the card recess (17).

2. The smart card connector (10) for two smart cards according to claim 1 wherein said guide members (317, 318) are biased towards each other and wherein the card guiding and grounding means (312, 316) start from respective wider wing portions (310, 314).

3. The smart card connector (10) for two smart cards according to claim 1, wherein the guiding and grounding means (312, 316) are provided in the form of guide arms (312, 316) which preferably extend in a card insert direction (55).

4. The smart card connector (10) for two smart cards as set forth in claim 1 **characterized in that** the card guiding and grounding means (312, 316) serve both for guiding the second card to during insertion and precisely positioning the second card with respect to the contact zones of the second card (2), which have a small spacing, as well as with respect to the spacing of the contact elements (24) of the second set (22), and
wherein further the card guiding/grounding means in the form of two arms, particular biased contact arms (336, 337), which are formed adjacent to the entrance opening.

5. The smart card connector (10) for two smart cards as set forth in claim 1 wherein the card guiding/grounding means (312, 316) comprise each at least one guide means (317, 318, 320, 321) which cooperate with the card edges of the second card, and wherein the card guiding/grounding means preferably comprise each guide arms (312, 316).

6. The smart card connector (10) for two smart cards as set forth in claim 5, wherein the guide arms (312, 316) extend into the card receiving recess (17) of the second card (2) in the event that no second card (2) is inserted.

7. The smart card connector (10) for two smart cards as set forth in one or more of the preceding claims in particular according to claim 1 wherein check holes (306) are provided in the wing (301, 302) which, where the cover (14) is closed, come into alignment with the check holes (79) of the shielding element (12), and
wherein the cover (14) comprises a recess (307) which is located in the closed condition of the cover [on the card insert side] in the area of the check holes (79) and in the area of the check holes (306) such that the check holes (79, 306) are freely accessible from above.

8. The smart card connector (10) for two smart cards as set forth in one or more of the preceding claims, in particular, according to claim 1 wherein at least one holding element (245) projects out of the plane of the shielding element (12), such that wherein the cover (14) is closed, the holding element (245) projects through an opening (246) in at least one of the wings (301, 302) and extends with its upper end into the card receiving recess (17) of the second card (2).

9. The smart card connector (10) for two smart cards as set forth in one or more of the preceding claims, in particular, according to claim 1 wherein at least one grounding/conducting spring (326, 327) is fixably mounted at one of the wings (301, 302) such that the grounding/conducting spring projects beyond the plane between the two wings (301, 302) such that in the closed condition of the cover (14), the grounding/conducting spring and the conducting springs (326, 327), respectively, come into contact with the shielding metal sheet (shielding element) (12).

10. The smart card connector (10) for two smart cards according to claims 8 or 9 wherein at least one holding element (245) projects through an opening (246) in the wing (302) wherein the opening (246) is aligned with the opening (247) in the coupling plate (341) wherein the holding element (245) is arranged such, that it can 'snap into a recess (208) of the second card (2).

11. The smart card connector (10) for two smart cards according to one of the preceding claims wherein the guide arms (312, 216) are biased in the direction towards each other.

12. The smart card connector (10) for two smart cards according to one of the preceding claims, wherein four card guide members (317, 318) are provided at the cover (14).

13. The smart card connector (10) for two smart cards according to one of the preceding claims, wherein an abutment (133) for the lateral guidance of the second card (2) projects from the coupling plate (341) into the card receiving recess (17) for the second card and wherein further another abutment (333) for the lateral guidance of the card (2) projects from the wing (302) into the card recess (17) for the second card (2).

## Revendications

1. Connecteur de carte intelligente (10) pour deux cartes intelligentes (cartes à puce), le connecteur de carte intelligente comprenant un porte-contacts (11) dans lequel sont agencés un premier ensemble (21) d'éléments de contact et un deuxième ensemble (22) d'éléments de contact, un élément de protection (12) étant prévu sur le porte-contacts (11) pour protéger le premier ensemble de contacts, l'élément de protection définissant, avec la surface supérieure (30) du porte-contacts, un premier logement de réception de carte (16) pour la première carte,
dans lequel pour la protection du deuxième ensemble (22) d'éléments de contact, un couvercle (14), assurant un effet de protection, est monté de façon pivotante sur l'élément de protection (12) et est adapté à recevoir l'une des cartes intelligentes,
dans lequel le couvercle (14) comprend une plaque de liaison (341) qui assure la connexion pivotante avec l'élément de protection (12) et dans lequel le couvercle comprend en outre, pour former un deuxième logement de réception de carte (17) pour la deuxième carte (2), des ailes (301, 302) éloignées de la plaque de liaison (341),
lesdites ailes formant des moyens de guidage et de mises à la masse (312, 316) d'une carte qui peuvent, premièrement, venir en contact avec les contacts conducteurs (342, 343) du porte-contacts (11) et qui, deuxièmement, forment des éléments de guidage (317, 318, 320, 321) qui guident avec précision la deuxième carte pendant son insertion dans le logement de carte (17) indépendamment des tolérances de la carte et qui maintiennent la carte dans le logement de carte (17).

2. Connecteur de carte intelligente (10) pour deux cartes intelligentes selon la revendication 1, dans lequel les éléments de guidage (317, 318) sont sollicités l'un vers l'autre et dans lequel les moyens de guidage et de mise à la masse (312, 316) d'une carte commencent au niveau de portions d'ailes plus larges (310, 314) respectives.

3. Connecteur de carte intelligente (10) pour deux cartes intelligentes selon la revendication 1, dans lequel les moyens de guidage et de mise à la masse (312, 316) sont prévus sous la forme de bras de guidage (312, 316) qui s'étendent de préférence dans une direction d'insertion de carte (55).

4. Connecteur de carte intelligente (10) pour deux cartes intelligentes selon la revendication 1, **caractérisé en ce que** les moyens de guidage et de mise à la masse (312, 316) de carte servent tous deux à guider la deuxième carte pendant l'insertion et à positionner de façon précise la deuxième carte en ce qui concerne les zones de contact de la deuxième carte (2), qui ont un petit espacement, ainsi qu'en ce qui concerne l'espacement des éléments de contact (24) du deuxième ensemble (22), et
dans lequel en outre les moyens de guidage et de mise à la masse de carte ont la forme de deux bras, en particulier de bras de contact sollicités (336, 337), qui sont formés à côté de l'ouverture d'entrée.

5. Connecteur de carte intelligente (10) pour deux cartes intelligentes selon la revendication 1, dans lequel chacun des moyens de guidage et de mise à la masse (312, 316) de carte comprend au moins un moyen de guidage (317, 318, 320, 321) qui coopère avec les bords de la deuxième carte, et dans lequel chacun des moyens de guidage et de mise à la masse de carte comprend de préférence des bras de guidage (312, 316).

6. Connecteur de carte intelligente (10) pour deux cartes intelligentes selon la revendication 5, dans lequel les bras de guidage (312, 316) s'étendent dans le logement de réception de carte (17) de la deuxième carte (2) dans le cas où aucune deuxième carte (2) n'est insérée.

7. Connecteur de carte intelligente (10) pour deux cartes intelligentes selon une ou plusieurs des revendications précédentes, en particulier selon la revendication 1, dans lequel des trous de contrôle (306) sont prévus dans les ailes (301, 302) qui, lorsque le couvercle (14) est fermé, viennent en alignement avec les trous de contrôle (79) des éléments de protection (12), et
dans lequel le couvercle (14) comprend un renfoncement (307) qui est situé dans l'état fermé du couvercle [sur le côté d'insertion de carte] dans la zone des trous de contrôle (79) et dans la zone des trous de contrôle (306) de telle sorte que les trous de contrôle (79, 306) sont accessibles librement par le dessus.

8. Connecteur de carte intelligente (10) pour deux cartes intelligentes selon une ou plusieurs des revendications précédentes, en particulier selon la revendication 1, dans lequel au moins un élément de maintien (245) fait saillie hors du plan de l'élément de protection (12), de sorte que lorsque le couvercle (14) est fermé, l'élément de maintien (245) fait saillie par une ouverture (246) dans au moins une des ailes (301, 302) et s'étend avec son extrémité supérieure dans le logement de réception de carte (17) de la deuxième carte (2).

9. Connecteur de carte intelligente (10) pour deux cartes intelligentes selon une ou plusieurs des revendications précédentes, en particulier selon la revendication 1, dans lequel au moins un ressort de mise à la masse et de conduction (326, 327) est monté fixe sur une des ailes (301, 302) de telle sorte que le ressort de mise à la masse et de conduction fait saillie au-delà du plan entre les deux ailes (301, 302) de sorte que dans l'état fermé du couvercle (14) le ressort de mise à la masse et de conduction et les ressorts de conduction (326, 327), respectivement, viennent en contact avec la feuille de métal de protection (élément de protection) (12).

10. Connecteur de carte intelligente (10) pour deux cartes intelligentes selon la revendication 8 ou 9, dans lequel au moins un élément de maintien (245) fait saillie par une ouverture (246) dans l'aile (302), dans lequel l'ouverture (246) est alignée avec l'ouverture (247) dans la plaque de liaison (341), dans lequel l'élément de maintien (245) est agencé de telle sorte qu'il puisse s'encliqueter dans un renfoncement (208) de la deuxième carte (2).

11. Connecteur de carte intelligente (10) pour deux cartes intelligentes selon l'une des revendications précédentes, dans lequel les bras de guidage (312, 216) sont sollicités l'un vers l'autre.

12. Connecteur de carte intelligente (10) pour deux cartes intelligentes selon l'une des revendications précédentes, dans lequel quatre éléments de guidage de carte (317, 318) sont prévus au niveau du couvercle (14).

13. Connecteur de carte intelligente (10) pour deux cartes intelligentes selon l'une des revendications précédentes, dans lequel une butée (133) pour le guidage latéral de la deuxième carte (2) fait saillie de la plaque de liaison (341) dans le logement de réception de carte (17) pour la deuxième carte, et dans lequel en outre une autre butée (333) pour le guidage latéral de la carte (2) fait saillie de l'aile (302) vers le logement de carte (17) pour la deuxième carte (2).
